# EUROPÄISCHE PATENTANMELDUNG

(11) **EP 4 653 265 A1**
(43) Veröffentlichungstag der Anmeldung: **26.11.2025**
(21) Anmeldenummer: 24177362.1
(22) Anmeldetag: 22.05.2024
(51) Int. Cl.: B60R 16/037, G01C 1/00, G01C 21/36, G10L 13/08, G10L 15/00

(54) **AUTOMATISIERTE PRIORISIERUNG VON BENACHRICHTIGUNGEN UND SPRACHAUSGABEN IN EINEM FAHRZEUG**

(71) Anmelder: Deutsche Telekom AG, 53113 Bonn (DE)
(72) Erfinder: MINOW, Jascha, Bensheim (DE); JAHN, Carl, Wiesbaden (DE); EL MALLOUKI, Said, St. Goar (DE)
(74) Vertreter: Braun-Dullaeus Pannen Emmerling Patent- & Rechtsanwaltspartnerschaft mbB

(57) **Zusammenfassung**

Die vorliegende Erfindung betrifft ein Verfahren zur Steuerung eines Sprachausgabesystem eines Fahrzeugs umfassend die folgenden Schritte:
- einen ersten Schritt, bei dem zumindest ein Eingangssignal mittels einer Sensoreinheit erfasst wird,
- einen zweiten Schritt, bei dem das zumindest eine Eingangssignal mittels eines Signalanalysators analysiert wird,
- einen dritten Schritt, bei dem zumindest ein zur Ausgabe vorgesehenes Eingangssignal mittels einer Steuerungseinheit auf Grundlage der Analyse des Signalanalysators eine Priorität zugewiesen wird,
- einen vierten Schritt, bei dem das zumindest eine zur Ausgabe vorgesehene Eingangssignal in Abhängigkeit von der zugewiesenen Priorität von einer Ausgabeeinheit akustisch ausgegeben wird.

## Beschreibung

Die vorliegende Erfindung betrifft ein Verfahren zur Steuerung eines Sprachausgabe- und Benachrichtigungssystems eines Fahrzeugs. Zudem betrifft die Erfindung auch ein Sprachausgabe- und Benachrichtigungssystem.

Mit der Entwicklung moderner Fahrzeuge zu mobilen Computern und der Integration von mehr und mehr Diensten aus der Mobilfunkwelt ins Fahrzeug, werden die eingehenden Benachrichtigungen immer häufiger. Dazu kommt, dass Fahrzeuge eigene Benachrichtigungen in Form von akustischen Ausgaben erzeugen, seien es Navigationsansagen, Warntöne bei Geschwindigkeitsüberschreitung oder sonstigen Benachrichtigungen von zahlreichen Assistenzsystemen im Fahrzeug. Beispielsweise seien in diesem Zusammenhang auch Spurhalteassistenten und Aufmerksamkeitsassistenten genannt, welche den Nutzer über bestimmte Verkehrssituationen informieren.

Trotz der erhöhten Anzahl an Nachrichten und Signalen, kann es sein, dass die Insassen des Fahrzeuges gegebenenfalls eine Unterhaltung im Fahrzeug führen möchten. Bei gleichzeitiger Nutzung von Assistenzsystem, beispielsweise dem Navigationssystems, kann es dabei zu der Situation kommen, in denen das Assistenzsystem die Unterhaltung mit einer akustischen Ausgabe, beispielsweise einer Sprachansage, unterbricht. Nun kann es sein, dass der Nutzer nicht unbedingt alle Ansagen des Navigationssystems deaktivieren möchte, um beispielsweise gerade bei Navigationssystemen eine Abbiegeanweisung nicht zu verpassen und damit einen Umweg zu vermeiden. Gleiches trifft auf alle anderen Signale und Benachrichtigungen des Fahrzeugs zu, also beispielsweise eingehende Anrufe, Assistenzwarnungen, Kurznachrichten und dergleichen. Diese kontinuierlich im Blick zu haben wird immer schwieriger, die technische Integration der unterschiedlichen "Störquellen" ist in vielen Fällen noch nicht vollständig und eher rudimentär. Beispielsweise sind hier Texteinblendung auf dem Display oder ein blinkendes Symbol auf dem Head-Up-Display genannt, welche als Quellen oft noch gar nicht integriert sind.

Die Aufgabe der zugrundeliegenden Erfindung besteht vor diesem Hintergrund darin ein Verfahren zur Steuerung eines Sprachausgabesystems eines Fahrzeugs Verfügung zu stellen, welches auf einfache und effiziente Weise die die Priorisierung von Benachrichtigungen und Sprachausgaben so durchführt, dass Störungen der Nutzer des Fahrzeugs reduziert werden, aber gleichzeitig eine sichere und effiziente Fahrzeugführung durch den Nutzer gewährleistet ist.

Die Erfindung löst diese Aufgabe durch ein Verfahren zur Steuerung einen Sprachausgabesystems eines Fahrzeugs, welches die Merkmale des Anspruchs 1 aufweist.

Hierzu umfasst das Verfahren zur Steuerung eines Sprachausgabesystem eines Fahrzeugs die folgenden Schritte:
- einen ersten Schritt, bei dem zumindest ein Eingangssignal mittels einer Sensoreinheit erfasst wird,
- einen zweiten Schritt, bei dem das zumindest eine Eingangssignal mittels eines Signalanalysators analysiert wird,
- einen dritten Schritt, bei dem zumindest ein zur Ausgabe vorgesehenes Eingangssignal mittels einer Steuerungseinheit auf Grundlage der Analyse des Signalanalysators eine Priorität zugewiesen wird,
- einen vierten Schritt, bei dem das zumindest eine zur Ausgabe vorgesehene Eingangssignal in Abhängigkeit von der zugewiesenen Priorität von einer Ausgabeeinheit akustisch ausgegeben wird.

Beim erfindungsgemäßen Verfahren wird das zumindest eine Eingangssignal in einem ersten Schritt von der zumindest einen Sensoreinheit erfasst. Beispielsweise wird das jeweilige Eingangssignal von der jeweiligen Sensoreinheit erfasst. Dabei kann eine Mehrzahl von Eingangssignalen durch eine Vielzahl von Sensoreinheiten erfasst werden. Die Eingangssignale werden darauf hin von einem Signalanalysator analysiert, bzw. ausgewertet (zweiter Schritt). Auf Grundlage des Ergebnisses der Analyse des Signalanalysators wird mittels einer Steuerungseinheit den Eingangssignalen, die zur Ausgabe vorgesehen sind, die jeweilige Priorität zugewiesen. Im vierten Schritt werden die zur Ausgabe vorgesehenen Eingangssignale in Abhängigkeit der zugewiesenen Priorität von der Ausgabeeinheit akustisch ausgegeben. Von den erfassten Eingangssignalen sind aller oder nur ein Teil zur Ausgabe mittels der Ausgabeeinheit vorgesehen. Die Gewichtung der akustisch ausgegebenen Eingangssignale entsprechend der zugewiesenen Priorität. Durch Zuweisung der jeweiligen Priorität werden die erfassten und analysierten Eingangssignale bezüglich ihrer Wichtigkeit eingeteilt. Entsprechend dieser Wichtung werden die Eingangssignal dann von der Ausgabeeinheit ausgegeben, wobei insbesondere die Lautstärke des ausgegebenen Eingangssignals von der Priorität des Eingangssignals abhängt. So können beispielsweise unwichtige akustische Signale, wie beispielsweise das Eingehen von unwichtigen Nachrichten, automatisch bezüglich der Lautstärke reduziert oder gar nicht erst ausgegeben werden. Auch können Eingangssignale, welche die abgespielte Musik im Fahrzeug repräsentieren, hinsichtlich der Lautstärke reduziert werden, wenn Eingangssignale, die verkehrsrelevante Signale repräsentieren, ausgeben werden oder Personen sich im Auto unterhalten.

Eine bevorzugte Ausführung der Erfindung sieht vor, dass beim ersten Schritt ein visuelles, ein textuelles oder ein akustisches Eingangssignal mittels der zumindest einer Sensoreinheit erfasst wird. Dabei ist die zumindest eine Sensoreinheit beispielsweise, ein Mikrofon, eine Kamera, ein Abstandssensor oder eine Auswertungseinheit. Vorzugsweise erfasst die Erfassungseinheit dabei aus textuellen Signalen eine Textnachricht und aus visuellen Signalen eine Bildinformation.

Bei dem Eingangssignal handelt es sich um ein visuelles, textuelles oder akustisches Signal. Unter dem visuellen Signal ist dabei ein Signal zu verstehen, welches eine Bildinformation repräsentiert. Die Bildinformation kann eine visuelle Anzeige innerhalb des Fahrzeugs und/oder die Bildinformation einer internen oder externen Kamera sein. Die visuelle Anzeige kann dabei beispielsweise die visuelle Anzeige eines Navigationsgerätes, eines Armaturenbretts, eines Head-up-Display, oder der gleichen sein. Dementsprechend ist die Sensoreinheit für das visuelle Signal eine Kamera und/oder eine Erfassungseinheit, die die visuelle Anzeige innerhalb des Fahrzeugs erfasst. Unter dem textuellen Signal ist ein Signal zu verstehen, welches eine Textnachricht repräsentiert. Diese Textnachricht kann beispielsweise eine Nachricht sein, welche insbesondere an den Nutzer des Fahrzeugs gerichtet ist (SMS, E-Mail, Messenger Nachricht, etc.). Die Textnachricht wird von einer Erfassungseinheit erfasst, welche die entsprechende Nachricht auswertet. Unter dem akustischen Signal ist ein Signal zu verstehen, welches Sprache, Musik, Geräusche, Warnsignale oder dergleichen repräsentiert. Akustischen Signale werden beispielsweise von Mikrofonen oder durch eine Erfassungseinheit erfasst, welche an Lautsprecher gerichtete Signale auswertet. Die Nutzung von vielfältigen Sensoreinheiten zur Erfassung von Eingangssignal ermöglicht es ein breites Spektrum an Informationen, die an den Nutzer des Fahrzeugs gerichtet sind, zu erfassen und für die weitere Verarbeitung, insbesondere Analyse und Priorisierung, zu berücksichtigen.

Eine weitere bevorzugte Ausführung der Erfindung sieht vor, dass beim zweiten Schritt die Quelle und/oder der Inhalt des zumindest einen Eingangssignals vom Signalanalysator bestimmt wird.

Unter der Quelle des Eingangssignals ist der Ursprung des Eingangssignals zu verstehen. Dies kann beispielsweise die Sensoreinheit sein, welche das jeweilige Eingangssignal erfasst. Es kann aber auch die Quelle, bzw. der Sender, einer Nachricht oder eines eingehenden Anrufs sein. Es kann aber auch der Fahrzeugnutzer sein, der gerade im Fahrzeug spricht. Unter dem Inhalt des Eingangssignals ist die an den Nutzer gerichtete Information zu verstehen. Beispielsweise können dies sein: eine Entfernung- oder Richtungsangabe eines Navigationsgeräts, eine Information innerhalb einer Textnachricht, ein Gesprächsinhalt von Nutzern des Fahrzeugs und so weiter. Die Bestimmung der Quelle und/oder des Inhalts des Eingangssignals ermöglicht eine einfache und effiziente Priorisierung des jeweiligen Eingangssignals. Beispielsweise kann durch Kenntnis der Quelle und/oder des Inhalts des Eingangssignals auf einfache Weise eine Kategorisierung durchgeführt werden, welche zusätzlich die Priorisierung des Eingangssignals erleichtert.

Eine weitere bevorzugte Ausführung der Erfindung sieht vor, dass die Bestimmung von der Quelle und/oder des Inhalts des zumindest einen Eingangssignals mittels einer Künstlichen-Intelligenz-Einheit durchgeführt wird, insbesondere wobei die Künstliche-Intelligenz-Einheit auf einer generativen künstlichen Intelligenz basiert.

Die Bestimmung der Quelle und/oder des Inhalts der Eingangssignale mittels einer künstlichen Intelligenz hat den Vorteil, dass aus komplexeren Eingangssignalen auf einfache und effiziente Weise die nötigen Informationen extrahiert werden können. Beispielsweise lassen sich mit Hilfe der Künstlichen-Intelligenz-Einheit charakteristische Inhalte aus Bildinformation oder Nachrichten gewinnen und in kurzer Zeit auswerten, insbesondere kategorisieren.

Eine weitere bevorzugte Ausführung der Erfindung sieht vor, dass beim zweiten Schritt Eingangssignale, welche ein akustisches Signal repräsentieren, mittels einer natürlichen Spracherkennungseinheit ausgewertet werden.

Die Verwendung einer natürlichen Spracherkennungseinheit zur Auswertung von Eingangssignalen, welche ein akustisches Signal repräsentieren, bietet den Vorteil, dass sich damit schnell und auf einfache Weise akustische Signale auswerten lassen. Insbesondere wird durch die natürliche Spracherkennungseinheit erkannt, welcher Fahrzeugnutzer gerade redet, sodass auf Grundlage dieser Quell-Information die Priorität von Eingangssignalen, die durch die Ausgabeeinheit akustisch ausgegeben werden, angepasst wird. Insbesondere wird die Lautstärke der ausgegeben Eingangssignale reduziert, wenn bestimmte Personen reden, zum Beispiel der Fahrer des Fahrzeugs.

Eine weitere bevorzugte Ausführung der Erfindung sieht vor, dass das zumindest eine Eingangssignal mittels einer Übertragungseinheit an eine externe Rechnereinheit übermittelt wird, wobei sich der den zweiten Schritt durchführende Signalanalysator zumindest teilweise in der externen Rechnereinheit befindet, insbesondere wobei die externe Rechnereinheit ein Sever ist.

Die Übertragungseinheit ist vorzugsweise ein Telekommunikationsmodul, welches die Eingangssignale über ein Funktelekommunikationsnetzwerk an eine externe Rechnereinheit übermittelt. Die Verwendung einer externen Rechnereinheit, insbesondere eines Servers, bietet den Vorteil, dass komplexere Rechenvorgänge ausgelagert werden, sodass die Rechnereinheit innerhalb des Fahrzeugs weniger leistungsfähig sein kann. Insbesondere umfasst die externe Rechnereinheit zumindest zum Teil die Künstliche-Intelligenz-Einheit, welche aus komplexeren Eingangssignalen die für die Priorisierung erforderlichen Information bestimmt.

Eine weitere bevorzugte Ausführung der Erfindung sieht vor, dass dem zumindest einen zur Ausgabe vorgesehenen Eingangssignal auf Grundlage der Analyse des Signalanalysators die jeweilige Priorität zugewiesen wird, insbesondere auf Grundlage der bestimmten Quelle und/oder Inhalt des zur Ausgabe vorgesehenen Eingangssignals, wobei ein jeweiliger Prioritätswert bestimmt wird.

Auf Grundlage der Quelle und/oder des Inhalts der Eingangssignale lässt sich auf einfache Weise die Priorität der durch die Ausgabeeinheit akustisch ausgegebenen Eingangssignale ermitteln. Durch Angabe eines nummerischen Prioritätswerts, oder Scores, lässt sich dazu die Lautstärke und die Verzögerung des ausgegebenen akustischen Eingangssignals auf leichte Weise einstellen und innerhalb des Fahrzeugs regulieren.

Eine weitere bevorzugte Ausführung der Erfindung sieht vor, dass beim dritten Schritt die jeweilige Priorität des zumindest einen zur Ausgabe vorgesehenen Eingangssignals auf Grundlage der bestimmten Quelle des zur Ausgabe vorgesehenen Eingangssignals bestimmt wird, wobei sicherheitsrelevante Quellen, insbesondere eine Müdigkeitsüberwachungs-einheit, ein Abstandssensor und/oder ein Totwinkelsensor, im Vergleich zu anderen zur Ausgabe vorgesehenen Eingangssignalen eine höhere Priorität aufweisen, insbesondere einen höheren Prioritätswert.

Die höhere Priorisierung von Eingangssignal aus sicherheitsrelevanten Quellen führt dazu, dass diese im Vergleich zu anderen ausgegebenen Eingangssignalen mit einer größeren Gewichtung von der Ausgabeeinheit ausgegeben werden, insbesondere eine größere Lautstärke aufweisen. Insbesondere werden Eingangssignale von für die Sicherheit nicht so wichtigen Quellen, wie zum Beispiel dem Radio, ruhiggestellt, mithin der Prioritätswert signifikant reduziert. Auf diese Weise wird die Sicherheit bei der Fahrzeugführung vorteilhafterweise erhöht.

Eine weitere bevorzugte Ausführung der Erfindung sieht vor, dass beim dritten Schritt die jeweilige Priorität des zumindest einen zur Ausgabe vorgesehenen Eingangssignals auf Grundlage der bestimmten Quelle des zur Ausgabe vorgesehenen Eingangssignals bestimmt wird, wobei die Priorität der Quelle, insbesondere der Prioritätswert der Quelle, mittels einer Eingabeeinheit manuell eingestellt wird.

Durch die manuelle Vorgabe der Priorität einer Quelle ist es dem Fahrzeugnutzer vorteilhafterweise möglich die Ausgabe von akustischen Signalen von bestimmten Quellen individuell anzupassen. Beispielsweise wird manuell vorgegeben, dass die Priorität von akustischen Signalen, die vom Radio stammen, eine höhere Priorität zugewiesen wird als akustischen Signalen, die aus einem Navigationsgerät stammen. Auch kann vorgegeben werden, dass Gespräche im Fahrzeug eine erhöhte Priorität aufweisen, sodass bei Gesprächen die Priorität von ausgegebenen Eingangssignalen, wie zum Beispiel Radio oder Navigationsgerät, reduziert wird, um deren Lautstärke zu reduzieren.

Eine weitere bevorzugte Ausführung der Erfindung sieht vor, dass die Priorität, insbesondere der Prioritätswert, von der Wichtigkeit des Inhalts für die Steuerung des Fahrzeugs abhängt, und/oder dass die Priorität, insbesondere der Prioritätswert, zumindest einer Inhaltskategorie mittels einer Eingabeeinheit manuell eingestellt wird.

Durch die höhere Priorisierung von Inhalten, die die Steuerung des Fahrzeugs betreffen, lässt sich eine sicherere Fahrzeugführung ermöglichen. Vorzugsweise wird die Priorität des ausgegebenen Eingangssignals mit der Wichtigkeit des Inhalts für die Fahrzeugführung erhöht. Die manuelle Vorgabe der Priorität in Abhängigkeit von dem Inhalt des ausgegebenen Eingangssignals erlaubt eine individuelle Anpassung des Sprachausgabesystems durch den Fahrzeugnutzer. Vorzugsweise kann der Fahrzeugnutzer der bestimmten Inhaltskategorie eine gewünschte Priorität zuweisen. Zum Beispiel können Nachrichten, die eine bestimmte Person oder ein bestimmtes Thema betreffen, eine höhere oder niedrigere Priorität zugewiesen werden.

Eine weitere bevorzugte Ausführung der Erfindung sieht vor, dass der Inhalt einer Navigationsansage oder einer Navigationsdarstellung bestimmt wird, insbesondere wobei die Wichtigkeit des Inhalts davon abhängt in welcher Entfernung das nächste Fahrereignis erfolgt, insbesondere die nächste Richtungsänderung, insbesondere wobei die Priorität, insbesondere der Prioritätswert, mit der Wichtigkeit des Inhalts für die Steuerung des Fahrzeuges steigt.

Durch Bestimmung des Inhalts einer Navigationsansage oder einer Navigationsdarstellung durch den Signalanalysator lassen sich vorzugsweise Information gewinnen, die die Fahrzeugführung betreffen. Indem die Priorität von der Wichtigkeit des Inhalts für die Steuerung des Fahrzeugs abhängt, wird erreicht, dass der Fahrzeugführer nicht von unwichtigen Navigationsinhalten gestört wird. Gleichzeitig wird sichergestellt, dass für die Steuerung des Fahrzeugs wichtige Navigationsinhalte betont und dadurch vom Fahrzeugführer besser wahrgenommen werden. Beispielsweise wird die Priorität des ausgegebenen Eingangssignals in Abhängigkeit von der Distanz zum nächsten Fahrereignis erhöht.

Eine weitere bevorzugte Ausführung der Erfindung sieht vor, dass der Inhalt eines akustischen Signals eines im Fahrzeug befindlichen Mikrofons bestimmt wird, insbesondere wobei bei Erkennung eines Gesprächs im Fahrzeugt die Priorität, insbesondere der Prioritätswert, der ausgegebenen Eingangssignale reduziert wird.

Die Verwendung von Mikrofonen zur Erfassung von Eingangssignalen, die Gespräche und/oder Geräusche innerhalb und/oder außerhalb des Fahrzeugs repräsentieren, erlaubt es diese bei der Priorisierung der ausgegebenen Eingangssignale zu berücksichtigen. Vorzugsweise werden die Lautstärken der ausgegebenen Eingangssignale, zum Beispiel Musik oder Navigationsansagen, reduziert, wenn ein Gespräch stattfindet.

Eine weitere bevorzugte Ausführung der Erfindung sieht vor, dass das Eingangssignal ein textuelles Signal, insbesondere eine Nachricht ist, wobei die Quelle und/oder der Inhalt des textuellen Signals von der Ausgabeeinheit akustisch ausgegeben, bzw. wiedergegeben, wird, wobei die Priorität des ausgegebenen Eingabesignals von der Quelle und/oder dem Inhalt des textuellen Signals abhängt. Vorzugsweise wird das textuelle Signal je nach Priorität gar nicht, mit entsprechender Lautstärke oder verzögert ausgegeben.

Auf diese Weise werden vom Sprachausgabesystem textuelle Signale, beispielsweise Nachrichten, wie SMS, E-Mails oder Messenger-Nachrichten, wiedergegeben, wobei die Lautstärke der Wiedergabe von der Quelle und/oder dem Inhalt des textuellen Signals abhängt. Beispielsweise wird Nachrichten von Quellen mit geringer Wichtigkeit eine geringere Priorität zugewiesen, sodass diese mit einer geringeren Lautstärke oder gar nicht ausgegeben, bzw. wiedergegeben, werden. Vorteilhafterweise wird so eine unnötige Störung der Fahrzeugnutzer vermieden. Demgegenüber wird beispielsweise Nachrichten von Quellen, denen eine hohe Wichtigkeit zugeordnet worden ist, z.B. Familienmitglieder oder Mitarbeiter, eine höhere Priorität zugewiesen, sodass diese mit einer höheren Lautstärke ausgegeben werden. Vorteilhafterweise werden die Fahrzeugnutzer auf diese Weise nur gestört, wenn die Nachrichten von wichtigen Quellen, respektive Personen, stammen. Das gleiche gilt für den Inhalt des textuellen Signals, auch dieser wird je nach Wichtigkeit gar nicht oder mit einer entsprechenden Lautstärke ausgegeben.

Eine weitere bevorzugte Ausführung der Erfindung sieht vor, dass beim vierten Schritt das zur Ausgabe vorgesehene Eingabesignal in Abhängigkeit von der jeweiligen Priorität, insbesondere vom Prioritätswert, gar nicht, mit entsprechender Lautstärke oder einer zeitlichen Verzögerung ausgegeben wird.

"Auf diese Weise kann die Ausgabe in Abhängigkeit von der Priorität je nach Situation flexibel gehandhabt werden. Vorzugsweise werden unwichtige zur Ausgabe vorgesehene Eingabesignale (geringe Priorität, niedriger Prioritätswert) gar nicht, mit einer geringen Lautstärke und/oder verzögert ausgegeben. Dagegen werden wichtige zur Ausgabe vorgesehene Eingabesignale (hohe Priorität, hoher Prioritätswert) mit größerer Lautstärke und/oder ohne Verzögerung ausgegeben.

Die der Erfindung zugrundeliegende Aufgabe wird auch durch ein Sprachausgabesystem eines Fahrzeugs geöst, welches die folgenden Einheiten umfasst:
- zumindest einer Sensoreinheit , die dazu eingerichtet ist Eingangssignale zu erfassen,
- einen Signalanalysator, der dazu eingerichtet ist die Eingangssignale zu analysieren,
- eine Steuerungseinheit, die dazu eingerichtet ist Eingangssignalen, die zur Ausgabe vorgesehen sind, eine Priorität zu zuweisen, und
- eine Ausgabeeinheit, die dazu eingerichtet ist die zur Ausgabe vorgesehenen Eingangssignale in Abhängigkeit der jeweils zugewiesenen Priorität akustisch auszugegeben,
wobei die Einheiten dazu eingerichtet sind, die zuvor genannten Verfahrensschritte auszuführen.

Die der Erfindung zugrundeliegende Aufgabe wird im Übrigen durch ein Computerprogrammprodukt zur Steuerung eines Sprachausgabesystems gelöst, welches bei der Ausführung des Programms durch das Sprachausgabesystem dieses veranlasst die oben genannten Schritte des Verfahrens auszuführen.

Im Folgenden werden bevorzugte Ausführungsbeispiele der vorliegenden Erfindung unter Bezugnahme auf die Figuren erläutert:
- Fig. 1:: zeigt eine schematische Darstellung des Sprachausgabesystems in einem Fahrzeug, und
- Fig. 2:: zeigt eine schematische Darstellung des erfindungsgemäßen Verfahrens.

Nachfolgend werden Merkmale der vorliegenden Erfindung anhand von bevorzugten Ausführungsformen erläutert. Die vorliegende Offenbarung ist dabei nicht auf die konkret genannten Merkmalskombinationen beschränkt. Vielmehr lassen sich die hier genannten Merkmale beliebig zu erfindungsgemäßen Ausführungsformen kombinieren, sofern dies nachfolgend nicht ausdrücklich ausgeschlossen ist.

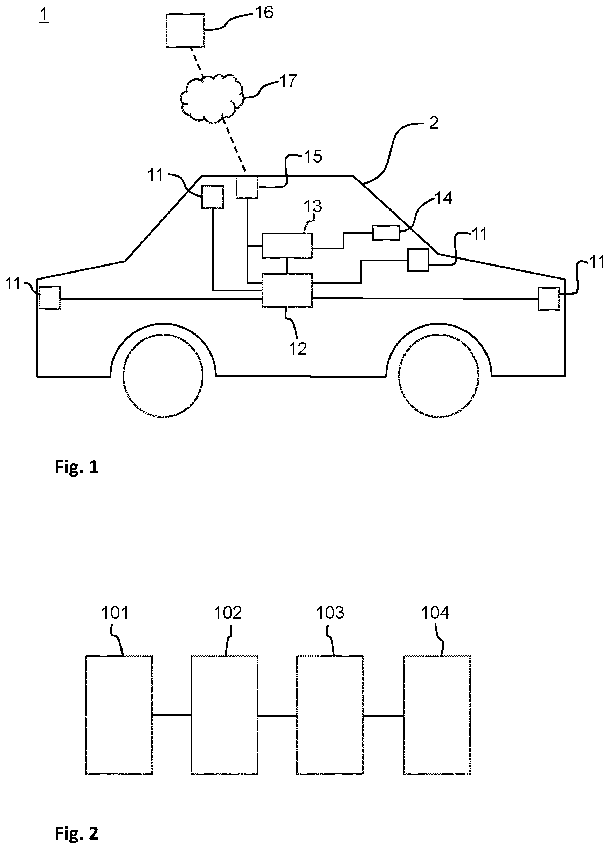

Fig. 1 zeigt eine schematische Darstellung eines Sprachausgabesystems 1 eines Fahrzeugs 2.

Das Sprachausgabesystem 1 umfasst Sensoreinheiten 11, die dazu eingerichtet sind Eingangssignale zu erfassen. Sensoreinheiten 11 sind vorzugsweise Mikrofone, Kameras, Abstandssensoren oder Erfassungseinheiten. Die Erfassungseinheiten sind dabei dazu eingerichtet aus textuellen Signalen Textnachrichten oder aus visuellen Signalen Bildinformationen zu erfassen.

Das Sprachausgabesystem 1 umfasst zudem ein Signalanalysator 12, mit dem die erfassten Eingangssignale ausgewertet werden, wobei insbesondere die Quelle und/oder der Inhalt des jeweiligen Eingangssignals bestimmt wird. Vorzugsweise wird die Bestimmung der Quelle und/oder des Inhalts der Eingangssignale mittels einer künstlichen Intelligenz durchgeführt. Akustische Signale werden bevorzugt von einer natürlichen Spracherkennungseinheit ausgewertet. Die Signalanalyse wird dabei zumindest teilweise von einer externen Rechnereinheit 16 durchgeführt. Dazu werden die Eingangssignale vorzugsweise von einer Übertragungseinheit 15 über ein Funktelekommunikationsnetzwerk 17 die Rechnereinheit übertragen. Von der Recheneinheit 16 bestimmte Informationen zu den Quellen und/oder Inhalte werden über das Funktelekommunikationsnetzwerk 17 zurück an die Übertragungseinheit 15 gesendet und dort vom Signalanalysator 12 und/oder einer Steuerungseinheit 13 weiterverarbeitet.

Auf Grundlage der Auswertung des Signalanalysators 12 wird mittels der Steuerungseinheit 13 den Eingangssignalen, die zur Ausgabe mittels der Ausgabeeinheit 14 vorgesehen sind, eine Priorität, insbesondere ein Prioritätswert zugewiesen. Die Priorisierung der Eingangssignale, die zur Ausgabe vorgesehen sind, wird auf Grundlage der Auswertung mittels der Steuerungseinheit 13 durchgeführt. Vorzugsweise hängt die Priorität der ausgegebenen Eingangssignale von der jeweiligen Quelle und/oder dem jeweiligen Inhalt ab. Dabei werden ausgegebene Eingangssignale von sicherheitsrelevanten Quellen bei der Ausgabe durch die Ausgabeeinheit 14 höher priorisiert als andere Eingangssignale, die ausgegeben werden. Vorzugsweise lässt sich die Priorität, insbesondere der Prioritätswert, von unterschiedlichen Quellen oder Quellkategorien manuell mittels einer Eingabeeinheit vorgeben. Zudem kann die Priorität, insbesondere der Prioritätswert, von der Wichtigkeit des Inhalts des ausgegebenen Eingangssignals abhängigen. Insbesondere lassen sich die Inhalte in Inhaltskategorien einteilen, wobei den Inhaltskategorien eine jeweilige Priorität zugewiesen werden. Beispielsweise wird der Inhalt einer Navigationsansage oder einer Navigationsdarstellung bestimmt und die Priorität des ausgegebenen Eingangssignals anhand der Wichtigkeit des Inhalts bestimmt, wobei die Wichtigkeit vorzugsweise davon abhängt, in welcher Entfernung das nächste Fahrereignis (z.B. Richtungsänderung) erfolgt. Zudem wird der Inhalt eines akustischen Signals eines Mikrofons, welches sich im Fahrzeug befindet, für die Bestimmung der Prioritäten der zur Ausgabe vorgesehen Eingangssignale berücksichtigt. Vorzugsweise werden die Prioritäten, insbesondere der Prioritätswerte, reduziert, wenn innerhalb des Fahrzeugs Gespräche stattfinden und/oder bestimmte Personen reden.

Die Ausgabe der zur Ausgabe vorgesehenen Eingangssignale erfolgt mittels der Ausgabeeinheit 14, wobei die Ausgabeeinheit 14 mehrere Komponenten, insbesondere Lautsprecher, aufweisen kann. Die Lautstärke der Ausgabe der einzelnen ausgegebenen Eingangssignale hängt von der jeweiligen Priorität, insbesondere dem jeweiligen Prioritätswerts, ab. Die zur Ausgabe vorgesehenen Eingangssignale werden erst ausgegeben, wenn die jeweiligen Prioritätswerte durch die Steuerungseinheit 13 zugewiesen worden sind. Beispielsweise werden textuelle Signale, insbesondere Nachrichten, nach Bestimmung des jeweiligen Prioritätswerts mit der entsprechenden Lautstärke ausgegeben, respektive wiedergegeben.

Fig. 2 stellt das erfindungsgemäße Verfahren zur Steuerung eines Sprachausgabesystems schematisch dar. Das Verfahren startet mit dem ersten Schritt 101, in dem zumindest ein Eingangssignal mittels einer Sensoreinheit 11 erfasst wird. Die erfassten Eingangssignale werden in einem zweiten Schritt 102 mittels eines Signalanalysators 12 analysiert. Auf Grundlage der Analyse des Signalanalysators 12 wird den zur Ausgabe vorgesehenen Eingangssignalen in einem dritten Schritt 103 mittels einer Steuerungseinheit eine Priorität zugewiesen. In einem vierten Schritt 104, werden die zur Ausgabe vorgesehenen Eingangssignale in Abhängigkeit von der zugewiesenen Priorität von einer Ausgabeeinheit 14 akustisch ausgegeben.

Damit ist ein Sprachausgabesystem 1 vorgeschlagen, welches Quellen und Inhalt von eingehenden Nachrichten aller Art, also akustische, textuelle, visuelle und ggf. weitere analysieren kann und die Priorisierung und Ausgabe des Signals zentral koordiniert. Dieses Sprachausgabesystem 1 kann Bestandteil des Infotainment Systems des Fahrzeugs 2 sein und aufgrund dessen vorzugsweise sowohl Fremdgeräte über Bluetooth, WiFi als auch die bordinternen Benachrichtigungen empfangen und ausspielen. Darüber hinaus kann das Sprachausgabesystem 1 auch Zugang zu den Komponenten haben, die in modernen Autos für Müdigkeitsüberwachung und Sprachassistenzsysteme erforderlich sind, wie Mikrofone, Kameras (nach innen gerichtet) und Sensoren, die Aussagen über den Zustand der Umgebungsluft erlauben. All diese Eingangssignale oder Eingabedaten laufen vorzugsweise parallel in eine Verarbeitungskette ein. Dabei wird die Eingabe (das Eingabesignal) analysiert und eine Priorität zugeordnet, welche auch als maximale Verzögerung bezeichnet werden kann. Im Grunde wird also ein Wert oder Score für die Wichtigkeit und die Dringlichkeit des Eingabesignal bestimmt. Bei akustischen Signalen lassen sich die Prioritätsinformationen bereits oft von der Quelle ableiten. Bei eingehenden Sprachnachrichten, beispielsweise vom Navi oder vom Smartphone kann das System zunächst per NLU (Natural Language Unit) die Aussage, bzw. den Inhalt, erkennen und vorzugsweise über diverse Parameter, also bspw. die Distanz bis zum Abbiegen, die Dringlichkeit einstufen und ggf. entscheiden die Nachricht gar nicht auszugeben, leiser auszugeben oder zeitverzögert auszugeben. Vorzugsweise bietet das System dadurch eine Benachrichtigungs-Queue, die in Echtzeit und nahezu verzögerungsfrei auf eingehende Signale reagieren kann und diese zu gegebener Zeit auf dem richtigen Kanal ausspielen kann. Beispielsweise kann eine Textnachricht vorgelesen werden, während eine Navigationsansage komplett unterdrückt wird und sich der Fahrzeugnutzer auf die Navigationsgeräteausgabe verlassen kann. Darüber hinaus kann das System auch Umgebungsgeräusche und Aktivitäten der Insassen auswerten und in die Analyse einfließen lassen. Je nach vorheriger Priorisierung berücksichtigt das Sprachausgabesystem Unterhaltungen zwischen den Insassen, um ggf. zurückhaltender bei Sprachausgaben zu sein. Bei Kollisionsgefahr, beispielsweise beim Einparkvorgang, wird das entsprechende Eingangssignal sofort ausgegeben. Versucht bspw. ein Insasse auf dem Rücksitz eine Unterhaltung anzufangen, wird das System vorzugsweise eine eventuell laufende Musik entsprechend in der Lautstärke reduzieren oder ganz abschalten. Unterbrechungen werden damit minimiert und Benachrichtigungen aller Art so wenig wie möglich störend ausgespielt, ohne den Anspruch an Sicherheit zu reduzieren. Zeitkritisches mit hoher Priorität wird sofort ausgegeben, je nach Wichtigkeit auch auf mit verschiedenen Ausgabeeinheiten. Vorzugsweise werden eingehende Anrufe und Textnachrichten nach Bedürfnissen des Nutzers priorisiert, dazu gibt es einen Prioritätswert, bzw. ein Scoring, welches auf den Aktionen des Nutzers und einem etwaigen Training basiert.

Ein Ablaufbeispiel des erfindungsgemäßen Verfahrens kann wie folgt aussehen: Eine Unterhaltung zwischen Passagieren findet statt (Audioanalyse der 4 Eingangsmikrofone im Fahrzeug sowie Belegungssensoren in den Sitzen), Musik läuft (Infotainment Status), Navigation ist aktiv (Infotainment Status).
1. Das Navi sendet eine Sprachansage an den Fahrer: "Bitte in 2km links bleiben".
2. Das System, wendet die NLU auf die Ansage an und erkennt: Spurhalteanweisung, Distanz: 2km. Das Scoring, bzw. die Priorisierung oder Prioritätszuweisung, bestimmt einen Prioritätswert (Score) basierend auf der Dringlichkeit und Wichtigkeit von 20 Punkten. Maximal möglich sind 100.
3. Die laufende Unterhaltung zwischen den Passagieren wird mit einer Priorität von 30 klassifiziert. Dies erfolgt aufgrund vorhandener Nutzereinstellungen.
4. Daraus folgt: Das System spielt die Spurhalteanweisung des Navis nicht akustisch aus. Es werden lediglich die visuellen Hinweise angezeigt.

Das Fahrzeug ist mittlerweile 1.5km weitergefahren und auf die rechte Spur gewechselt.
1. Das Navi sendet eine Sprachansage an den Fahrer: "Bitte in 500m auf die linke Spur wechseln"
2. Das System, wendet die NLU auf die Ansage an und erkennt: Spurwechselanweisung, Distanz: 500m. Das Scoring, bzw. die Priorisierung oder die Prioritätszuweisung, berechnet einen Prioritätswert (Score) von 50 Punkten. Maximal möglich sind 100
3. Die laufende Unterhaltung zwischen den Passagieren wird mit einer Priorität von 30 klassifiziert. Dies erfolgt aufgrund vorhandener Nutzereinstellungen
4. Die laufende Musik wird mit einer Priorität von 10 klassifiziert. Auch dies erfolgt aufgrund vorhandener Nutzereinstellungen
5. Daraus folgt: Das System pausiert die Musik des Navis, erhöht aufgrund der Diskussion im Fahrzeug die Lautstärke der Ansage und gibt diese akustisch aus. Zusätzlich werden die visuellen Hinweise angezeigt.

### Bezugszeichenliste:

- 1: Sprachausgabesystem
- 2: Fahrzeug

- 11: Sensoreinheit
- 12: Signalanalysator
- 13: Steuerungseinheit
- 14: Ausgabeeinheit
- 15: Übertragungseinheit
- 16: externe Rechnereinheit / Server
- 17: Funktelekommunikationsnetzwerk

- 101: erster Schritt, Eingangssignalerfassung
- 102: zweiter Schritt, Eingangssignalanalyse
- 103: dritter Schritt, Prioritätszuweisung
- 104: vierter Schritt, Ausgabe

## Patentansprüche

1. Verfahren zur Steuerung eines Sprachausgabesystem eines Fahrzeugs umfassend die folgenden Schritte:
- einen ersten Schritt (101), bei dem zumindest ein Eingangssignal mittels einer Sensoreinheit (11) erfasst wird,
- einen zweiten Schritt (102), bei dem das zumindest ein Eingangssignal mittels eines Signalanalysators (12) analysiert wird,
- einen dritten Schritt (103), bei dem zumindest ein zur Ausgabe vorgesehenes Analyse des Signalanalysators (12) eine Priorität zugewiesen wird,
- einen vierten Schritt (104), bei dem das zumindest eine zur Ausgabe vorgesehene Eingangssignal in Abhängigkeit von der zugewiesenen Priorität von einer Ausgabeeinheit (14) akustisch ausgegeben wird.

2. Verfahren zur Steuerung eines Sprachausgabesystems nach Anspruch 1, **dadurch gekennzeichnet, dass** beim ersten Schritt (101) ein visuelles, ein textuelles oder ein akustisches Eingangssignal mittels der zumindest einen Sensoreinheit (11) erfasst wird, wobei die zumindest eine Sensoreinheit (11), ein Mikrofon, eine Kamera, ein Abstandssensor, ein Sitzbelegungssensor oder eine Erfassungseinheit ist, insbesondere wobei die Erfassungseinheit aus textuellen Signalen eine Textnachricht erfasst und/oder aus visuellen Signalen eine Bildinformation erfasst.

3. Verfahren zur Steuerung eines Sprachausgabesystems nach einem der vorherigen Ansprüche, **dadurch gekennzeichnet, dass** beim zweiten Schritt (102) die Quelle und/oder der Inhalt des zumindest einen Eingangssignals vom Signalanalysator (12) bestimmt wird.

4. Verfahren zur Steuerung eines Sprachausgabesystems nach Anspruch 3, **dadurch gekennzeichnet, dass** die Bestimmung von der Quelle und/oder dem Inhalt des zumindest einen Eingangssignals mittels einer Künstlichen-Intelligenz-Einheit durchgeführt wird, insbesondere wobei die Künstliche-Intelligenz-Einheit auf einer generativen künstlichen Intelligenz basiert.

5. Verfahren zur Steuerung eines Sprachausgabesystems nach Anspruch 4, **dadurch gekennzeichnet, dass** beim zweiten Schritt (102) Eingangssignale, welche ein akustisches Signal repräsentieren, mittels einer natürlichen Spracherkennungseinheit ausgewertet werden.

6. Verfahren zur Steuerung eines Sprachausgabesystems nach einem der Ansprüche 4 oder 5, **dadurch gekennzeichnet, dass** das zumindest eine Eingangssignal mittels einer Übertragungseinheit (15) an eine externe Rechnereinheit (16) übermittelt wird, wobei sich der den zweiten Schritt (102) durchführende Signalanalysator (12) zumindest teilweise in der externen Rechnereinheit (16) befindet, insbesondere wobei die externe Rechnereinheit (16) ein Sever ist.

7. Verfahren zur Steuerung eines Sprachausgabesystems nach einem der vorherigen Ansprüche, **dadurch gekennzeichnet, dass** beim dritten Schritt (103) dem zumindest einen zur Ausgabe vorgesehenen Eingangssignal auf Grundlage der Analyse des Signalanalysators (12) die jeweilige Priorität zugewiesen wird, insbesondere auf Grundlage der bestimmten Quelle und/oder des bestimmten Inhalts des jeweiligen Eingangssignals, wobei ein jeweiliger Prioritätswert bestimmt wird.

8. Verfahren zur Steuerung eines Sprachausgabesystems nach Anspruch 7, **dadurch gekennzeichnet, dass** beim dritten Schritt (103) die jeweilige Priorität des zumindest einen zur Ausgabe vorgesehenen Eingangssignals auf Grundlage der bestimmten Quelle des zur Ausgabe vorgesehenen Eingangssignals bestimmt wird, wobei sicherheitsrelevante Quellen, insbesondere eine Müdigkeitsüberwachungseinheit, ein Abstandssensor und/oder ein Totwinkelsensor, im Vergleich zu anderen zur Ausgabe vorgesehenen Eingangssignalen eine höhere Priorität aufweisen, insbesondere einen höheren Prioritätswert.

9. Verfahren zur Steuerung eines Sprachausgabesystems nach Anspruch 7 oder 8, **dadurch gekennzeichnet, dass** beim dritten Schritt (103) die jeweilige Priorität des zumindest einen zur Ausgabe vorgesehenen Eingangssignals auf Grundlage der bestimmten Quelle des zur Ausgabe vorgesehenen Eingangssignals bestimmt wird, wobei die Priorität der Quelle, insbesondere der Prioritätswert der Quelle, mittels einer Eingabeeinheit manuell eingestellt wird.

10. Verfahren zur Steuerung eines Sprachausgabesystems nach einem der Ansprüche 7 bis 9, **dadurch gekennzeichnet, dass** die Priorität, insbesondere der Prioritätswert, von der Wichtigkeit des Inhalts für die Steuerung des Fahrzeugs abhängt, und/oder dass die Priorität, insbesondere der Prioritätswert, zumindest einer Inhaltskategorie mittels einer Eingabeeinheit manuell eingestellt wird.

11. Verfahren zur Steuerung eines Sprachausgabesystems nach einem der Ansprüche 7 bis 10, **dadurch gekennzeichnet, dass** der Inhalt einer Navigationsansage oder einer Navigationsdarstellung bestimmt wird, insbesondere wobei die Wichtigkeit des Inhalts davon abhängt in welcher Entfernung das nächste Fahrereignis erfolgt, insbesondere die nächste Richtungsänderung, insbesondere wobei die Priorität, insbesondere der Prioritätswert, mit der Wichtigkeit des Inhalts für die Steuerung des Fahrzeuges steigt.

12. Verfahren zur Steuerung eines Sprachausgabesystems nach einem der Ansprüche 7 bis 11, **dadurch gekennzeichnet, dass** der Inhalt eines akustischen Signals eines im Fahrzeug befindlichen Mikrofons bestimmt wird, insbesondere wobei bei Erkennung eines Gesprächs im Fahrzeugt die Priorität, insbesondere der Prioritätswert, der zur Ausgabe vorgesehenen Eingangssignale reduziert wird.

13. Verfahren zur Steuerung eines Sprachausgabesystems nach einem der Ansprüche 7 bis 11, **dadurch gekennzeichnet, dass** das zur Ausgabe vorgesehene Eingangssignal ein textuelles Signal ist, insbesondere eine Nachricht, wobei die Quelle und/oder der Inhalt von der Ausgabeeinheit (14) akustisch wiedergegeben wird, wobei die Priorität von der Quelle und/oder dem Inhalt des abhängt.

14. Verfahren zur Steuerung eines Sprachausgabesystems nach einem der vorherigen Ansprüche, **dadurch gekennzeichnet, dass** beim vierten Schritt (104) das zur Ausgabe vorgesehene Eingabesignal in Abhängigkeit von der jeweiligen der Priorität, insbesondere vom Prioritätswert, gar nicht, mit entsprechender Lautstärke oder einer zeitlichen verzögert ausgegeben wird.

15. Sprachausgabesystem eines Fahrzeugs, welches die folgenden Einheiten umfasst:
- zumindest einer Sensoreinheit (11), die dazu eingerichtet ist Eingangssignale zu erfassen,
- einen Signalanalysator (12), der dazu eingerichtet ist die Eingangssignale zu analysieren,
- eine Steuerungseinheit (13), die dazu eingerichtet ist Eingangssignale, die zur Ausgabe vorgesehen sind, eine Priorität zu zuweisen, und
- eine Ausgabeeinheit (14), die dazu eingerichtet ist die zur Ausgabe vorgesehenen Eingangssignale in Abhängigkeit der jeweils zugewiesenen Priorität akustisch auszugegeben,
wobei die Einheiten dazu eingerichtet sind die Verfahrensschritte der Ansprüche 1 bis 14 auszuführen.

## Geänderte Patentansprüche

### Geänderte Patentansprüche gemäss Regel 137(2) EPÜ.

1. Verfahren zur Steuerung eines Sprachausgabesystem eines Fahrzeugs, das eingerichtet ist zum Empfang und zur Ausgabe von Benachrichtigungen, die von bordinternen Geräten und von Fremdgeräten erzeugt sind, umfassend die folgenden Schritte:
- in einem ersten Schritt (101) werden die Eingangssignale und Eingabedaten aller Geräte parallel in einer Verarbeitungskette mittels einer Sensoreinheit (11) erfasst,
- in einem zweiten Schritt (102) werden alle Eingangssignale mittels eines Signalanalysators (12) analysiert,
- in einem dritten Schritt (103) wird auf Grundlage der Analyse des Signalanalysators (12) jedem Eingangssignal mittels einer Steuerungseinheit (13) eine Priorität zugewiesen,
- in einem vierten Schritt (104) wird das zur Ausgabe vorgesehene Eingangssignal in Abhängigkeit von der zugewiesenen Priorität von einer Ausgabeeinheit (14) akustisch ausgegeben.

2. Verfahren zur Steuerung eines Sprachausgabesystems nach Anspruch 1, **dadurch gekennzeichnet, dass** beim ersten Schritt (101) ein visuelles, ein textuelles oder ein akustisches Eingangssignal mittels der zumindest einen Sensoreinheit (11) erfasst wird, wobei die zumindest eine Sensoreinheit (11), ein Mikrofon, eine Kamera, ein Abstandssensor, ein Sitzbelegungssensor oder eine Erfassungseinheit ist, insbesondere wobei die Erfassungseinheit aus textuellen Signalen eine Textnachricht erfasst und/oder aus visuellen Signalen eine Bildinformation erfasst.

3. Verfahren zur Steuerung eines Sprachausgabesystems nach einem der vorherigen Ansprüche, **dadurch gekennzeichnet, dass** beim zweiten Schritt (102) die Quelle und/oder der Inhalt des zumindest einen Eingangssignals vom Signalanalysator (12) bestimmt wird.

4. Verfahren zur Steuerung eines Sprachausgabesystems nach Anspruch 3, **dadurch gekennzeichnet, dass** die Bestimmung von der Quelle und/oder dem Inhalt des zumindest einen Eingangssignals mittels einer Künstlichen-Intelligenz-Einheit durchgeführt wird, insbesondere wobei die Künstliche-Intelligenz-Einheit auf einer generativen künstlichen Intelligenz basiert.

5. Verfahren zur Steuerung eines Sprachausgabesystems nach Anspruch 4, **dadurch gekennzeichnet, dass** beim zweiten Schritt (102) Eingangssignale, welche ein akustisches Signal repräsentieren, mittels einer natürlichen Spracherkennungseinheit ausgewertet werden.

6. Verfahren zur Steuerung eines Sprachausgabesystems nach einem der Ansprüche 4 oder 5, **dadurch gekennzeichnet, dass** das zumindest eine Eingangssignal mittels einer Übertragungseinheit (15) an eine externe Rechnereinheit (16) übermittelt wird, wobei sich der den zweiten Schritt (102) durchführende Signalanalysator (12) zumindest teilweise in der externen Rechnereinheit (16) befindet, insbesondere wobei die externe Rechnereinheit (16) ein Sever ist.

7. Verfahren zur Steuerung eines Sprachausgabesystems nach einem der vorherigen Ansprüche, **dadurch gekennzeichnet, dass** beim dritten Schritt (103) dem zumindest einen zur Ausgabe vorgesehenen Eingangssignal auf Grundlage der Analyse des Signalanalysators (12) die jeweilige Priorität zugewiesen wird, insbesondere auf Grundlage der bestimmten Quelle und/oder des bestimmten Inhalts des jeweiligen Eingangssignals, wobei ein jeweiliger Prioritätswert bestimmt wird.

8. Verfahren zur Steuerung eines Sprachausgabesystems nach Anspruch 7, **dadurch gekennzeichnet, dass** beim dritten Schritt (103) die jeweilige Priorität des zumindest einen zur Ausgabe vorgesehenen Eingangssignals auf Grundlage der bestimmten Quelle des zur Ausgabe vorgesehenen Eingangssignals bestimmt wird, wobei sicherheitsrelevante Quellen, insbesondere eine Müdigkeitsüberwachungseinheit, ein Abstandssensor und/oder ein Totwinkelsensor, im Vergleich zu anderen zur Ausgabe vorgesehenen Eingangssignalen eine höhere Priorität aufweisen, insbesondere einen höheren Prioritätswert.

9. Verfahren zur Steuerung eines Sprachausgabesystems nach Anspruch 7 oder 8, **dadurch gekennzeichnet, dass** beim dritten Schritt (103) die jeweilige Priorität des zumindest einen zur Ausgabe vorgesehenen Eingangssignals auf Grundlage der bestimmten Quelle des zur Ausgabe vorgesehenen Eingangssignals bestimmt wird, wobei die Priorität der Quelle, insbesondere der Prioritätswert der Quelle, mittels einer Eingabeeinheit manuell eingestellt wird.

10. Verfahren zur Steuerung eines Sprachausgabesystems nach einem der Ansprüche 7 bis 9, **dadurch gekennzeichnet, dass** die Priorität, insbesondere der Prioritätswert, von der Wichtigkeit des Inhalts für die Steuerung des Fahrzeugs abhängt, und/oder dass die Priorität, insbesondere der Prioritätswert, zumindest einer Inhaltskategorie mittels einer Eingabeeinheit manuell eingestellt wird.

11. Verfahren zur Steuerung eines Sprachausgabesystems nach einem der Ansprüche 7 bis 10, **dadurch gekennzeichnet, dass** der Inhalt einer Navigationsansage oder einer Navigationsdarstellung bestimmt wird, insbesondere wobei die Wichtigkeit des Inhalts davon abhängt in welcher Entfernung das nächste Fahrereignis erfolgt, insbesondere die nächste Richtungsänderung, insbesondere wobei die Priorität, insbesondere der Prioritätswert, mit der Wichtigkeit des Inhalts für die Steuerung des Fahrzeuges steigt.

12. Verfahren zur Steuerung eines Sprachausgabesystems nach einem der Ansprüche 7 bis 11, **dadurch gekennzeichnet, dass** der Inhalt eines akustischen Signals eines im Fahrzeug befindlichen Mikrofons bestimmt wird, insbesondere wobei bei Erkennung eines Gesprächs im Fahrzeugt die Priorität, insbesondere der Prioritätswert, der zur Ausgabe vorgesehenen Eingangssignale reduziert wird.

13. Verfahren zur Steuerung eines Sprachausgabesystems nach einem der Ansprüche 7 bis 11, **dadurch gekennzeichnet, dass** das zur Ausgabe vorgesehene Eingangssignal ein textuelles Signal ist, insbesondere eine Nachricht, wobei die Quelle und/oder der Inhalt von der Ausgabeeinheit (14) akustisch wiedergegeben wird, wobei die Priorität von der Quelle und/oder dem Inhalt des abhängt.

14. Verfahren zur Steuerung eines Sprachausgabesystems nach einem der vorherigen Ansprüche, **dadurch gekennzeichnet, dass** beim vierten Schritt (104) das zur Ausgabe vorgesehene Eingabesignal in Abhängigkeit von der jeweiligen der Priorität, insbesondere vom Prioritätswert, gar nicht, mit entsprechender Lautstärke oder einer zeitlichen verzögert ausgegeben wird.

15. Sprachausgabesystem eines Fahrzeugs, das eingerichtet ist zum Empfang und zur Ausgabe von Benachrichtigungen, die von bordinternen Geräten und von Fremdgeräten erzeugt sind, welches die folgenden Einheiten umfasst:
- zumindest einer Sensoreinheit (11), die dazu eingerichtet ist Eingangssignale und Eingabedaten aller Geräte parallel in einer Verarbeitungskette zu erfassen,
- einen Signalanalysator (12), der dazu eingerichtet ist alle Eingangssignale zu analysieren,
- eine Steuerungseinheit (13), die dazu eingerichtet ist, auf Grundlage der Analyse des Signalanalysators (12) jedem der Eingangssignale, die zur Ausgabe vorgesehen sind, eine Priorität zu zuweisen, und
- eine Ausgabeeinheit (14), die dazu eingerichtet ist die zur Ausgabe vorgesehenen Eingangssignale in Abhängigkeit der jeweils zugewiesenen Priorität akustisch auszugegeben, wobei die Einheiten dazu eingerichtet sind die Verfahrensschritte der Ansprüche 1 bis 14 auszuführen.
